# FASCICULE DE BREVET EUROPEEN

(11) **EP 3 516 217 B1**
(45) Date de publication et mention de la délivrance du brevet: **01.07.2020**
(21) Numéro de dépôt: 17783914.9
(22) Date de dépôt: 19.09.2017
(51) Int. Cl.: F04B 15/08, F04B 19/24, F04B 37/12, F04B 37/18

(54) **COMPRESSEUR D'HYDROGENE A HYDRURE METALLIQUE**
WASSERSTOFFVERDICHTER MIT METALLHYDRID
HYDROGEN COMPRESSOR WITH METAL HYDRIDE

(30) Priorité: 21.09.2016 FR 1658853
(43) Date de publication de la demande: 31.07.2019
(73) Titulaire: Commissariat à l'énergie atomique et aux énergies alternatives, 75015 Paris (FR)
(72) Inventeur: CHAISE, Albin, 38000 Grenoble (FR)
(74) Mandataire: Brevalex
(86) Numéro de dépôt international: PCT/FR2017/052502
(87) Numéro de publication internationale: WO 2018/055277

(56) Documents cités:
- WO-A1-2012/114229
- FR-A1- 2 924 787
- FR-A1- 2 950 045
- US-A1- 2011 303 175
- US-A1- 2014 363 346

## Description

### DOMAINE TECHNIQUE

La présente invention concerne un compresseur d'hydrogène, plus particulièrement un compresseur d'hydrogène à hydrure métallique adapté pour délivrer de l'hydrogène à des hautes pressions, par exemple des pressions supérieures à 100 bars.

### ART ANTÉRIEUR

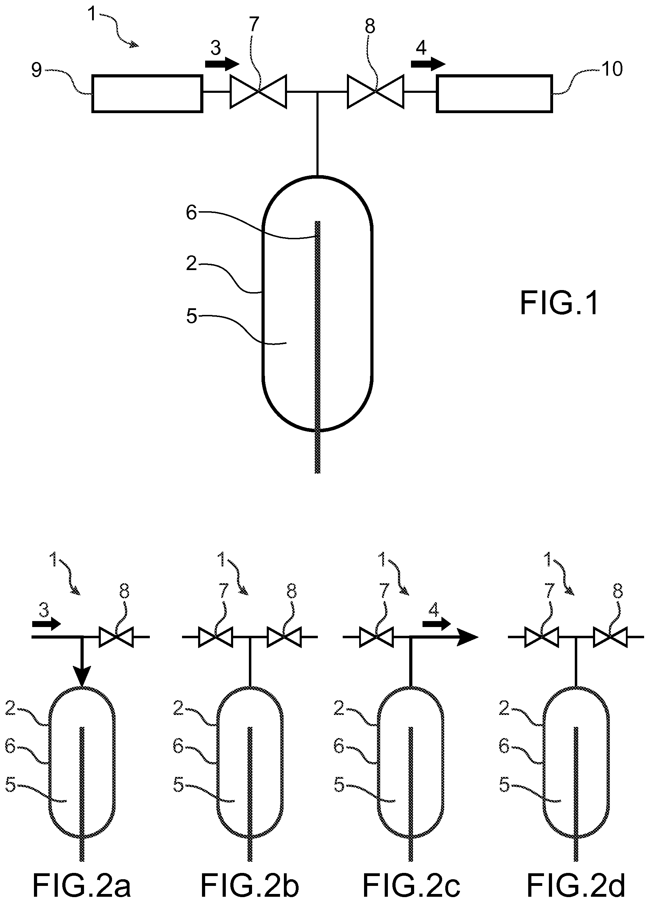

La figure 1 présente un compresseur d'hydrogène 1 à hydrure métallique connu de l'état de la technique et décrit dans le document [1] cité à la fin de la demande.

Ce compresseur 1 comprend :
- une enceinte de pression 2 comprenant une surface interne,
- une alimentation 3 en hydrogène,
- une évacuation 4 d'hydrogène,
- un élément de stockage 5 d'hydrogène adapté pour stocker ou libérer de l'hydrogène en fonction d'une température qui lui est imposée, l'élément de stockage 5 comprenant un matériau de stockage,
- un moyen d'échange thermique 6.

Un tel compresseur 1 permet la compression de l'hydrogène gazeux sans recours à un système mécanique impliquant le mouvement de parties mobiles.

Plus particulièrement, le principe de fonctionnement du compresseur à hydrogène à hydrure métallique est basé sur une absorption réversible de l'hydrogène par un matériau de stockage auquel sont imposés des cycles thermiques de refroidissement et d'échauffement.

Le matériau de stockage comprend en général une espèce métallique.

Le moyen d'échange thermique 6 destiné à échanger de la chaleur avec le matériau de stockage comprend généralement un tube métallique parcouru par un fluide caloporteur.

Le compresseur d'hydrogène 1 à hydrure métallique peut être alimenté, via un conduit d'alimentation pourvu d'un vanne d'alimentation 7, par une source d'hydrogène basse pression 9.

Le compresseur d'hydrogène 1 peut également être connecté, via un conduit de transfert pourvu d'une vanne de transfert 8, à un réservoir 10.

A titre d'exemple, les figures 2a - 2d illustrent le principe de fonctionnement, en quatre étapes, du compresseur d'hydrogène 1 à hydrure métallique.

Lors de la première étape (figure 2a), l'enceinte de pression, comprenant l'élément de stockage 5, est mise en communication avec la source d'hydrogène à basse pression (par exemple une pression comprise entre 0,02 bar et 270 bars) par ouverture de la vanne d'alimentation 7. Lors de cette même étape, l'élément de stockage 5 est refroidi par le moyen d'échange thermique 6 à une température qui peut être comprise entre - 100°C et 50°C. Aussi, dès lors qu'il est refroidi, l'élément de stockage 5 absorbe l'hydrogène.

La seconde étape (figure 2b) débute par l'isolation de l'enceinte de pression de la source d'hydrogène par fermeture de la vanne d'alimentation 7.

L'élément de stockage 5 est alors chauffé à une température comprise entre 30°C et 240°C. Il résulte une désorption de l'hydrogène stocké par l'élément de stockage 5 lors de la première étape, et donc une augmentation de la pression d'hydrogène dans l'enceinte de pression. Cette augmentation de pression est d'autant plus importante que la température imposée à l'élément de stockage 5 est importante.

En effet, la pression d'hydrogène varie selon une loi exponentielle de la température. La pression d'hydrogène dans l'enceinte de pression, à l'issue de la seconde étape, peut alors être comprise entre 3 bars et 4350 bars.

La vanne de transfert 8 est alors ouverte au début de la troisième étape (figure 2c) de manière à transférer l'hydrogène sous haute pression au réservoir 10, tout en imposant un chauffage à l'élément de stockage 5.

Dès lors que l'enceinte de pression est vide, la vanne de transfert 8 est fermée au début de la quatrième étape (figure 2d), et l'élément de stockage 5 est refroidi.

Ainsi, il est possible de remplir des réservoirs 10 d'hydrogène sous pression, notamment des réservoirs 10 d'hydrogène destinés à la distribution d'hydrogène dans des stations-services, ou encore des réservoirs 10 d'hydrogène destinés au transport de l'hydrogène.

Nous notons cependant que ce dispositif n'est pas satisfaisant.

En effet, l'efficacité thermique du compresseur d'hydrogène 1 à hydrure métallique connu de l'état de la technique n'est pas optimale.

Plus particulièrement, une partie de la quantité de chaleur fournie par le moyen d'échange thermique 6 sert également à chauffer l'enceinte de pression.

Un but de la présente invention est alors de proposer un compresseur d'hydrogène à hydrure métallique présentant une meilleure efficacité que les compresseurs d'hydrogène à hydrure métallique connus de l'état de la technique.

Un autre but de l'invention est également de proposer un compresseur d'hydrogène à hydrure métallique permettant d'atteindre des hautes pressions d'hydrogène, par exemple de pressions supérieures à 100 bars.

### EXPOSÉ DE L'INVENTION

Les buts de la présente invention sont, au moins en partie, atteints par un compresseur d'hydrogène à hydrure métallique comprenant :
- une enceinte de pression, comprenant un volume interne, délimité par une première surface interne,
- une enveloppe d'une épaisseur E, l'enveloppe comprenant une première surface externe en regard de la première surface interne, l'enveloppe comprenant un matériau isolant de première conductivité thermique,
- un élément de stockage d'hydrogène, contenu dans l'enveloppe, comprenant un matériau de stockage adapté pour stocker ou libérer de l'hydrogène en fonction d'une température qui lui est imposée, et présentant une seconde conductivité thermique supérieure à la première conductivité thermique.

L'enveloppe permet d'isoler thermiquement l'enceinte de pression de l'élément de stockage, et ainsi de limiter les échanges thermiques entre ces deux éléments.

Il est donc possible de compresser de l'hydrogène à des pressions supérieures à 100 bars tout en limitant les pertes dues une dissipation de la chaleur par l'enceinte de pression.

Selon un mode de mise en œuvre, le compresseur d'hydrogène comprend des agencements permettant une circulation d'hydrogène entre la première surface interne et la première surface externe.

Selon un mode de mise en œuvre, les agencements comprennent un espace annulaire disposé entre la première surface interne et la première surface externe, et/ou des canaux formés sur au moins une des première surface interne et première surface externe.

Selon un mode de mise en œuvre, l'enveloppe comprend en outre des moyens aptes à assurer un passage d'hydrogène au travers de l'épaisseur E de l'enveloppe.

Selon un mode de mise en œuvre, l'enveloppe comprend une porosité ouverte permettant le passage d'hydrogène au travers de l'épaisseur E de ladite enveloppe.

Selon un mode de mise en œuvre, l'enveloppe comprend au moins un perçage permettant le passage d'hydrogène au travers de l'épaisseur E de ladite enveloppe, avantageusement l'enveloppe comprend également un filtre coopérant avec l'au moins un perçage de manière à confiner l'élément de stockage dans l'enveloppe.

Selon un mode de mise en œuvre, l'épaisseur E de l'enveloppe est comprise entre 1 mm et 20 mm.

Selon un mode de mise en œuvre, l'enveloppe comprend au moins un des matériaux choisi parmi : PTFE, un polyamide, un polyuréthane, un polyéthylène, polypropylène, PEEK.

Selon un mode de mise en œuvre, la première conductivité thermique est inférieure à 0,3 W/m/K.

Selon un mode de mise en œuvre, le compresseur à hydrogène comprend en outre un moyen d'échange thermique apte à assurer un échange de chaleur de manière directe avec l'élément de stockage, avantageusement le moyen d'échange thermique comprend un tube parcouru par un fluide caloporteur.

Selon un mode de mise en œuvre, le moyen d'échange thermique comprend une seconde surface externe faite d'un matériau de troisième conductivité thermique, ledit moyen d'échange thermique traversant l'enceinte de pression par une première ouverture, le compresseur comprend en outre un moyen de liaison, comprenant une section de forme annulaire, ladite section de forme annulaire assurant un lien étanche entre le moyen d'échange thermique et l'enceinte de pression, et prévenant tout contact entre le moyen d'échange thermique et l'enceinte de pression, le moyen de liaison comprenant un matériau de quatrième conductivité thermique inférieure à un dixième de la troisième conductivité thermique de manière à isoler thermiquement le moyen d'échange thermique de l'enceinte de pression.

Selon un mode de mise en œuvre, l'enceinte de pression comprend une virole cylindrique s'étendant selon un axe longitudinal, comprenant une première extrémité au niveau de laquelle est formée la première ouverture, le moyen de liaison de forme annulaire étant en appui contre une butée formée au niveau de la première surface interne, la butée comprenant avantageusement un épaulement formé au niveau de la première surface interne.

Selon un mode de mise en œuvre, le moyen de liaison est maintenu contre la butée par un moyen de serrage, avantageusement le moyen de serrage comprend un bouchon comprenant un passage traversé par le moyen d'échange thermique.

Selon un mode de mise en œuvre, une rondelle anti friction est interposée entre le moyen de serrage et le moyen de liaison.

Selon un mode de mise en œuvre, le moyen de liaison comprend au moins un matériau choisi parmi : un élastomère, une céramique, l'inox ou un alliage de nickel.

Selon un mode de mise en œuvre, le moyen de liaison est également pourvu de premiers joints d'étanchéité assurant la liaison étanche entre l'enceinte de pression et le moyen d'échange thermique.

Selon un mode de mise en œuvre, le moyen d'échange thermique traverse également l'enceinte de pression par une seconde ouverture, des seconds joints d'étanchéité assurant l'étanchéité entre le moyen d'échange thermique et l'enceinte de pression au niveau de la deuxième ouverture.

### BRÈVE DESCRIPTION DES DESSINS

D'autres caractéristiques et avantages apparaîtront dans la description qui va suivre des modes de mise en œuvre du compresseur d'hydrogène à hydrure métallique selon l'invention, donnés à titre d'exemples non limitatifs, en référence aux dessins annexés dans lesquels :
- la figure 1 est une représentation schématique d'un compresseur à hydrure métallique connu de l'art antérieur,
- les figures 2a à 2d sont de représentations schématiques des quatre étapes de fonctionnement d'un compresseur à hydrure métallique,
- les figures 3a et 3b sont des représentations schématiques, respectives, selon une première extrémité et une seconde extrémité, selon une coupe comprenant l'axe longitudinal X du compresseur d'hydrogène à hydrure métallique selon un mode de réalisation de l'invention,
- les figures 4a et 4b représentent une section transverse d'un compresseur d'hydrogène s'étendant selon un axe longitudinal X, plus particulièrement, la figure 4a est une représentation schématique d'un espace annulaire disposé entre la première surface interne et la première surface externe, tandis que la figure 4b est une représentation schématique de canaux formés sur la première surface externe, selon un mode de réalisation de l'invention,
- la figure 5 est une représentation en coupe du moyen de liaison selon un mode de réalisation de l'invention.

### EXPOSÉ DÉTAILLÉ DE MODES DE RÉALISATION PARTICULIERS

L'invention décrite de manière détaillée ci-dessous met en œuvre un compresseur d'hydrogène à hydrure métallique dans lequel l'élément de stockage ainsi que le moyen d'échange thermique peuvent être thermiquement isolés de l'enceinte de pression afin d'améliorer l'efficacité du compresseur selon l'invention.

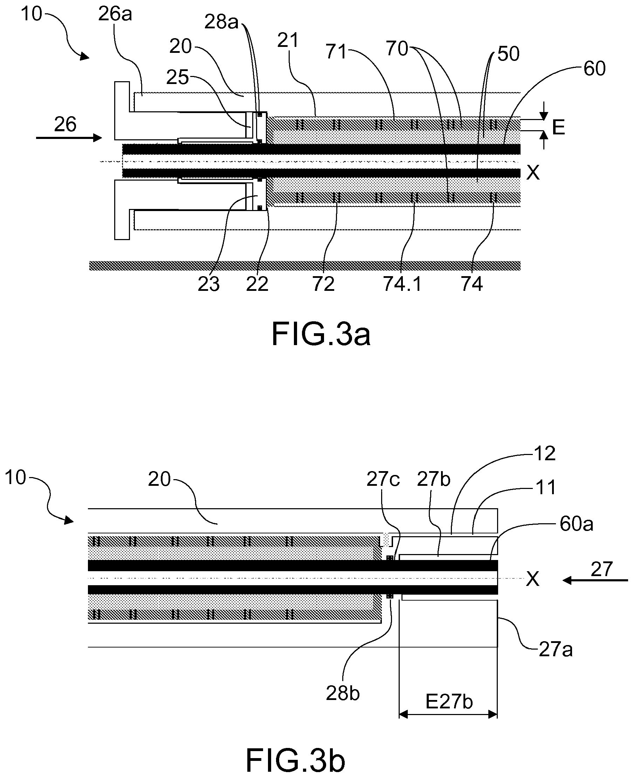

Sur les figures 3a et 3b, on peut voir un exemple de réalisation d'un compresseur d'hydrogène 10 à hydrure métallique selon la présente invention.

Le compresseur d'hydrogène 10, selon l'invention, comprend une enceinte de pression 20 comprenant un volume interne, délimité par une première surface interne 21.

Par enceinte de pression 20, nous entendons un contenant adapté pour résister à des hautes pressions, plus particulièrement des pressions supérieures à 100 bars.

L'enceinte de pression 20 a une épaisseur lui conférant une résistance mécanique suffisante pour résister aux pressions qui lui sont imposées (par épaisseur de l'enceinte de pression, nous entendons l'épaisseur de sa paroi).

L'homme du métier, avec ses connaissances générales, peut sans problème déterminer l'épaisseur de l'enceinte de pression la plus adaptée à l'application visée. A titre d'exemple, une enceinte de pression 20 peut être de forme cylindrique, et présenter une épaisseur comprise entre un dixième et deux fois son rayon interne. Par rayon interne, nous entendons le rayon de la plus petite des deux surfaces cylindriques formant l'enceinte de pression 20.

L'enceinte de pression 20 peut comprendre au moins un des matériaux choisi parmi : acier inox, acier au carbone, alliage à base de nickel, alliage à base de titane, d'aluminium ou de cuivre.

Le compresseur d'hydrogène 10 à hydrure métallique peut être alimenté, via un conduit d'alimentation 11, par une source d'hydrogène basse pression.

Le compresseur d'hydrogène 10 peut également être connecté, via un conduit de transfert 12, à un réservoir (un réservoir de stockage par exemple).

Tel que représenté à la figure 3b, le conduit d'alimentation 11 et le conduit de transfert 12 sont un seul et même conduit.

Le compresseur d'hydrogène 10 comprend également une enveloppe 70 d'une épaisseur E. L'enveloppe 70 comprend une première surface externe 71 en regard de la première surface interne 21. L'enveloppe 70 comprend un matériau isolant de première conductivité thermique.

Par exemple, l'enveloppe 70 peut comprendre au moins un des matériaux choisi parmi : PTFE (Polytétrafluoroéthène), un polyamide, un polyuréthane, un polyéthylène, un polypropylène, PEEK (polyétheréthercétone).

La première conductivité thermique peut être inférieure à 0,3 W/m/K.

Le compresseur d'hydrogène comprend également un élément de stockage 50 d'hydrogène, contenu dans l'enveloppe 70. Ainsi, l'enveloppe 70 prévient tout contact entre l'élément de stockage 50 et l'enceinte de pression 20.

L'élément de stockage 50 comprend un matériau de stockage adapté pour stocker ou libérer de l'hydrogène en fonction d'une température qui lui est imposée. Par exemple, le matériau de stockage peut absorber de l'hydrogène lorsqu'il est refroidi, et désorber ledit hydrogène lorsqu'il est chauffé.

Par exemple, le matériau de stockage peut comprendre au moins un des matériaux choisi parmi : des alliages de type AB, AB2, AB5, BCC, par exemple les familles FeTi, TiMn₂, LaNi₅, TiVCr, ou une combinaison de ces types d'alliages avec substitution ou ajouts d'autres éléments permettant d'ajuster les propriétés thermodynamiques du matériau de stockage aux conditions de fonctionnement du compresseur.

Le matériau de stockage peut être sous forme de poudre, compacté, ou fritté.

De manière avantageuse, le matériau de stockage présente une seconde conductivité thermique supérieure à la première conductivité thermique conférant à l'enveloppe 70 une fonction d'isolant thermique.

Le compresseur d'hydrogène 10 peut comprendre des agencements 72 permettant une circulation d'hydrogène entre la première surface interne 21 et la première surface externe 71. Par exemple, les agencements 72 peuvent comprendre un espace annulaire 72.1 disposé entre la première surface interne 21 et la première surface externe 71. De manière alternative ou complémentaire, les agencements peuvent comprendre des canaux 72.2 formés sur au moins une des première surface interne 21 et première surface externe 71.

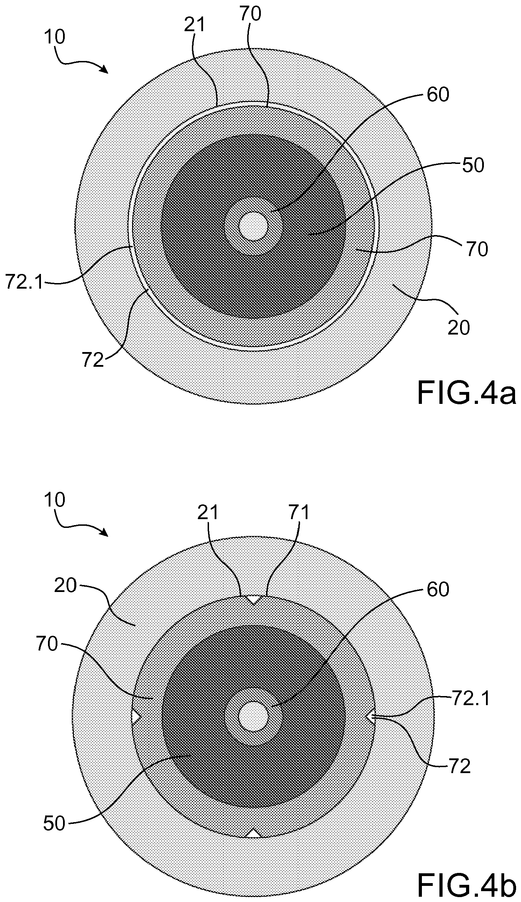

A titre d'exemple, les figures 4a et 4b représentent une section transverse d'un compresseur d'hydrogène 10 s'étendant selon un axe longitudinal X. Par section transverse, nous entendons une section dans un plan perpendiculaire à l'axe longitudinal X. Plus particulièrement, la figure 4a est une représentation schématique d'un espace annulaire 72.1 disposé entre la première surface interne 21 et la première surface externe 71, tandis que la figure 4b est une représentation schématique de canaux 72.2 formés sur la première surface externe 71 (le cas de figure où les canaux 72.2 sont formés sur la première surface interne 21 n'est pas représenté).

L'espace annulaire 72.1 peut être d'une épaisseur inférieure à 10% du rayon d'un volume cylindrique occupé par l'élément de stockage 50.

L'enveloppe 70 peut également comprendre des moyens aptes à assurer un passage d'hydrogène 74 au travers de l'épaisseur E de l'enveloppe 70.

Selon un premier mode de réalisation particulier des moyens aptes à assurer un passage d'hydrogène 74, l'enveloppe 70 peut comprendre une porosité ouverte permettant le passage d'hydrogène au travers de l'épaisseur E de ladite enveloppe 70 (par opposition à une porosité fermée, une porosité ouverte signifie une absence de cavités fermées au sein de l'enveloppe 70). La porosité ouverte de l'enveloppe 70 peut également jouer le rôle de filtre permettant de confiner le matériau de stockage dès lors que ce dernier est sous forme de poudre.

Une porosité ouverte peut être obtenue avec un matériau fritté ou sous forme de mousse. Les techniques pour la mise en forme du matériau formant l'enveloppe 70 sont connues de l'homme du métier et ne sont donc pas décrites en détails dans la présente invention.

Selon un second mode de réalisation particulier des moyens aptes à assurer un passage d'hydrogène 74, l'enveloppe 70 peut comprendre au moins un perçage 74.1 permettant le passage d'hydrogène au travers de l'épaisseur E de ladite enveloppe 70.

Le perçage 74.1 peut avantageusement être pourvu d'un filtre permettant un passage d'hydrogène, mais confinant le matériau de stockage dès lors que ce dernier est sous forme de poudre.

Nous notons que les premier et second modes de réalisation particuliers des moyens aptes à assurer un passage d'hydrogène 74 peuvent être considérés indépendamment l'un de l'autre ou pris en combinaison.

Avantageusement, la Déposante a remarqué qu'une épaisseur E de l'enveloppe 70 comprise entre 1 mm et 20 mm peut permettre une isolation thermique convenable entre l'enceinte de pression 20 et l'élément de stockage 50.

Le compresseur à hydrogène 10 peut comprendre en outre un moyen d'échange thermique 60 apte à assurer un échange de chaleur de manière directe avec l'élément de stockage 50.

Par assurer un échange de chaleur direct avec l'élément de stockage 50, on entend un moyen d'échange thermique 60 en contact avec ledit élément de stockage 50, avantageusement le moyen d'échange thermique 60 est au moins partiellement compris dans le volume de l'élément de stockage 50.

De manière avantageuse, le moyen d'échange thermique 60 peut comprendre un tube 60 parcouru par un fluide caloporteur comme de l'eau éventuellement sous pression, ou eau glycolée, ou une huile.

Le tube 60 parcouru par un fluide caloporteur peut comprendre un matériau résistant mécaniquement et chimiquement inerte avec l'hydrogène, par exemple le tube 60 peut comprendre au moins un des matériaux choisi parmi : un inox, un alliage de cuivre au béryllium, un laiton, un alliage de nickel, un acier au carbone.

Le moyen d'échange thermique 60 comprend une seconde surface externe 60a faite d'un matériau de troisième conductivité thermique.

La troisième conductivité thermique peut, par exemple, être supérieure à 10 W/m/K.

Le tube 60 peut également comprendre des ailettes adaptées pour augmenter la surface d'échange thermique avec l'élément de stockage 50, et permettre également une meilleure homogénéité de la température au sein dudit élément de stockage 50. De manière avantageuse, les ailettes s'étendent radialement au tube.

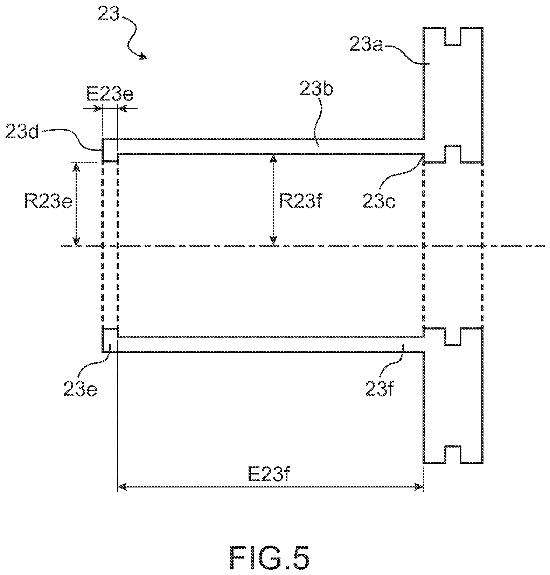

Le moyen d'échange thermique 60 traverse l'enceinte de pression 20 par une première ouverture 26. Un moyen de liaison 23 assure un lien étanche entre le moyen d'échange thermique 60 et l'enceinte de pression 20. Plus particulièrement, le moyen d'échange thermique 60 comprend une section de forme annulaire 23a rayon interne entre 2 mm et 100 mm, rayon externe entre 6mm et 110mm) interposée entre le moyen d'échange thermique 60 et l'enceinte de pression 20 (figure 5). Le moyen de liaison 23 comprend un matériau de quatrième conductivité thermique inférieure à un dixième de la troisième conductivité thermique de manière à isoler thermiquement le moyen d'échange thermique 60 de l'enceinte de pression 20.

Le moyen de liaison 23 peut également être doté de premiers joints d'étanchéité 28a, par exemple des premiers joints d'étanchéité 28a de forme torique en élastomère.

Le moyen de liaison 23 peut comprendre au moins un des matériaux choisi parmi : un polymère, une céramique, un acier, un inox, un alliage de nickel.

Selon un mode de réalisation particulier de l'invention, l'enceinte de pression peut comprendre une virole cylindrique s'étendant selon un axe longitudinal X.

La virole comprend une première extrémité 26a au niveau de laquelle est formée la première ouverture 26. La virole comprend également une seconde extrémité 27a opposée à la première extrémité 26a selon l'axe longitudinal X.

L'épaisseur de la virole peut être comprise entre un dixième et deux fois son rayon interne.

La section de forme annulaire 23a du moyen de liaison 23 est en appui contre une butée 22 formée au niveau de la première surface interne 21.

Par exemple, la butée 22 est formée par un épaulement de la première surface interne 21.

Le moyen de liaison 23 est maintenu contre la butée 22 par un moyen de serrage 24, avantageusement le moyen de serrage 24 comprend un bouchon 24 comprenant un passage traversé par le moyen d'échange thermique 60.

Le bouchon 24 peut être vissé au niveau de la première surface interne 21. Ce dernier assure un blocage mécanique du moyen de liaison 23 contre la butée 22. Par ailleurs, le bouchon 24 est conçu pour résister à la pression imposée par l'hydrogène sous pression dans l'enceinte de pression 20.

Le compresseur d'hydrogène 10 peut également comprendre une rondelle anti friction 25 (par rondelle nous entendons un élément de forme annulaire), interposée entre le bouchon 24 et le moyen de liaison 23. Plus particulièrement, la rondelle anti friction 25 est adaptée pour isoler thermiquement le moyen de liaison 23 du bouchon 24. La rondelle anti friction 25 peut, par exemple, comprendre un matériau polymère.

Le moyen de liaison 23 peut également comprendre un moyen de guidage 23b destiné à prévenir l'arcboutement du tube 60 lors de l'introduction dans l'enceinte de pression 20. Le moyen de guidage 23b peut être un cylindre comportant une extrémité liée 23c à la section de forme annulaire 23a, et une extrémité libre 23d. De manière avantageuse le moyen de guidage 23b en forme de cylindre présente une première section cylindrique 23e de rayon interne R23e égal au rayon du tube 60, et une seconde section cylindrique 23f, en contact avec la section de forme annulaire 23a, de rayon interne R23f supérieur au rayon du tube 60. Ainsi, le moyen de guidage 23b n'est en contact avec le tube 60 qu'au niveau de la première section cylindrique 23e. De manière avantageuse, la seconde section cylindrique 23f s'étend sur une longueur E23f au moins égale au rayon du tube 60. La première section cylindrique 23e peut s'étendre sur une longueur E23e comprise entre 0,1 mm et 11 mm.

Avantageusement, le moyen d'échange thermique 60 peut également traverser l'enceinte de pression 20 au niveau d'une seconde ouverture 27 et de manière étanche. Un ou plusieurs seconds joints d'étanchéité 28b peuvent être interposés entre l'enceinte de pression 20 et le moyen d'échange thermique 60.

La seconde ouverture 27 peut correspondre à un perçage formé à partir de la seconde extrémité 27a. Ledit perçage peut comprendre une première surface cylindrique 27b et une seconde surface cylindrique 27c juxtaposées. La première surface cylindrique 27b est en regard d'une section de la seconde surface externe 60a du moyen d'échange thermique 60, et s'étend selon l'axe longitudinal X, à partir de la seconde extrémité sur une longueur E27b. Le diamètre de la première surface cylindrique 27b est supérieur au diamètre du moyen d'échange thermique 60 de sorte qu'il n'y ai aucun contact entre la seconde surface interne 60a et la première surface cylindrique 27b (par exemple une lame d'air cylindrique d'une épaisseur comprise entre 0,1 mm et 10 mm peut ainsi être observée).

La seconde surface cylindrique 27c est en contact avec la seconde surface externe 60a sur une longueur E27c selon la direction de l'axe longitudinal X. Le second joint d'étanchéité 28b peut être interposé entre la seconde surface externe 60a et la seconde surface cylindrique

### REFERENCES

[1] WO 2012/114229

## Revendications

1. Compresseur d'hydrogène (10) à hydrure métallique comprenant :
- une enceinte de pression (20), comprenant un volume interne, délimité par une première surface interne (21),
- un élément de stockage (50) d'hydrogène comprenant un matériau de stockage adapté pour stocker ou libérer de l'hydrogène en fonction d'une température qui lui est imposée, et présentant une seconde conductivité thermique supérieure,
le compresseur étant **caractérisé en ce qu'**il comprend une enveloppe (70) d'une épaisseur E et dans laquelle est contenu l'élément de stockage (50), l'enveloppe (70) comprenant une première surface externe (71) en regard de la première surface interne (21), l'enveloppe (70) comprenant un matériau isolant de première conductivité thermique, la seconde conductivité thermique étant supérieure à la première conductivité thermique.

2. Compresseur selon la revendication 1, dans lequel le compresseur d'hydrogène (10) comprend des agencements (72) permettant une circulation d'hydrogène entre la première surface interne (21) et la première surface externe (71).

3. Compresseur selon la revendication 2, dans lequel les agencements (72) comprennent un espace annulaire (72.1) disposé entre la première surface interne (21) et la première surface externe (71), et/ou des canaux (72.2) formés sur au moins une des première surface interne (21) et première surface externe (71).

4. Compresseur selon l'une des revendications 1 à 3, dans lequel l'enveloppe (70) comprend en outre des moyens aptes à assurer un passage d'hydrogène (74) au travers de l'épaisseur E de l'enveloppe (70).

5. Compresseur selon la revendication 4, dans lequel l'enveloppe (70) comprend une porosité ouverte permettant le passage d'hydrogène au travers de l'épaisseur E de ladite enveloppe (70).

6. Compresseur selon la revendication 4 ou 5, dans lequel l'enveloppe (70) comprend au moins un perçage (74.1) permettant le passage d'hydrogène au travers de l'épaisseur E de ladite enveloppe (70), avantageusement l'enveloppe (70) comprend également un filtre coopérant avec l'au moins un perçage (74.1) de manière à confiner l'élément de stockage (50) dans l'enveloppe (70).

7. Compresseur selon l'une des revendications 1 à 6, dans lequel l'épaisseur E de l'enveloppe (70) est comprise entre 1 mm et 20 mm.

8. Compresseur selon l'une des revendications 1 à 7, dans lequel l'enveloppe (70) comprend au moins un des matériaux choisi parmi : PTFE, un polyamide, un polyuréthane, un polyéthylène, PEEK, polypropylène.

9. Compresseur selon l'une des revendications 1 à 8, dans lequel le compresseur à hydrogène (10) comprend en outre un moyen d'échange thermique (60) apte à assurer un échange de chaleur de manière directe avec l'élément de stockage (50), avantageusement le moyen d'échange thermique (60) comprend un tube parcouru par un fluide caloporteur.

10. Compresseur selon la revendication 9, dans lequel le moyen d'échange thermique (60) comprend une seconde surface externe (60a) faite d'un matériau de troisième conductivité thermique, ledit moyen d'échange thermique (60) traversant l'enceinte de pression (20) par une première ouverture (26), le compresseur comprend (10) comprend en outre un moyen de liaison (23), comprenant une section de forme annulaire (23a), ladite section de forme annulaire (23a) assurant un lien étanche entre le moyen d'échange thermique (60) et l'enceinte de pression (20), et prévenant tout contact entre le moyen d'échange thermique (60) et l'enceinte de pression (60), le moyen de liaison (23) comprenant un matériau de quatrième conductivité thermique inférieure à un dixième de la troisième conductivité thermique de manière à isoler thermiquement le moyen d'échange thermique (60) de l'enceinte de pression (20).

11. Compresseur selon la revendication 10, dans lequel l'enceinte de pression (20) comprend une virole cylindrique s'étendant selon un axe longitudinal (X), comprenant une première extrémité (26a) au niveau de laquelle est formée la première ouverture (26), le moyen de liaison (23) de forme annulaire étant en appui contre une butée formée au niveau de la première surface interne (21), la butée comprenant avantageusement un épaulement formé au niveau de la première surface interne (21).

12. Compresseur selon la revendication 11, dans lequel le moyen de liaison (23) est maintenu contre la butée par un moyen de serrage (24), avantageusement le moyen de serrage (24) comprend un bouchon (24) comprenant un passage traversé par le moyen d'échange thermique (60).

13. Compresseur selon la revendication 12, dans lequel une rondelle anti friction (25) est interposée entre le moyen de serrage (24) et le moyen de liaison (23).

14. Compresseur selon l'une des revendications 11 à 13, dans lequel le moyen de liaison (23) est également pourvu de premiers joints d'étanchéité (28a) assurant la liaison étanche entre l'enceinte de pression (20) et le moyen d'échange thermique (60).

15. Compresseur selon l'une des revendications 11 à 14, dans lequel le moyen d'échange thermique (60) traverse également l'enceinte de pression (20) par une seconde ouverture (27), des seconds joints d'étanchéité (28b) assurant l'étanchéité entre le moyen d'échange thermique (60) et l'enceinte de pression (20) au niveau de la deuxième ouverture (27).

## Patentansprüche

1. Wasserstoffverdichter (10) mit Metallhydrid, umfassend:
- eine Druckkammer (20), die ein Innenvolumen umfasst, das durch eine erste Innenoberfläche (21) begrenzt ist,
- ein Wasserstoffspeicherelement (50), das ein Speichermaterial umfasst, das dazu ausgelegt ist, Wasserstoff als Funktion einer ihm auferlegten Temperatur zu speichern oder freizusetzen, und das eine zweite größere thermische Leitfähigkeit aufweist,
wobei der Verdichter **dadurch gekennzeichnet ist, dass** er eine Hülle (70) mit einer Dicke E umfasst, in der das Speicherelement (50) enthalten ist, wobei die Hülle (70) eine erste Außenoberfläche (71) gegenüber der ersten Innenoberfläche (21) umfasst, wobei die Hülle (70) ein isolierendes Material mit einer ersten thermischen Leitfähigkeit umfasst, wobei die zweite thermische Leitfähigkeit größer als die erste thermische Leitfähigkeit ist.

2. Verdichter nach Anspruch 1, bei dem der Wasserstoffverdichter (10) Anordnungen (72) umfasst, die eine Zirkulation von Wasserstoff zwischen der ersten Innenoberfläche (21) und der ersten Außenoberfläche (71) erlauben.

3. Verdichter nach Anspruch 2, bei dem die Anordnungen (72) einen ringförmigen Raum (72.1) umfassen, der zwischen der ersten Innenoberfläche (21) und der ersten Außenoberfläche (71) angeordnet ist, und/oder Kanäle (72.2), die auf der ersten Innenoberfläche (21) und/oder der ersten Außenoberfläche (71) gebildet sind.

4. Verdichter nach einem der Ansprüche 1 bis 3, bei dem die Hülle (70) ferner Mittel umfasst, die dazu ausgelegt sind, einen Durchgang von Wasserstoff (74) durch die Dicke E der Hülle (70) hindurch zu gewährleisten.

5. Verdichter nach Anspruch 4, bei dem die Hülle (70) eine offene Porosität umfasst, die den Durchgang von Wasserstoff durch die Dicke E der Hülle (70) hindurch erlaubt.

6. Verdichter nach Anspruch 4 oder 5, bei dem die Hülle (70) wenigstens eine Bohrung (74.1) umfasst, die den Durchgang von Wasserstoff durch die Dicke E der Hülle (70) hindurch erlaubt, wobei die Hülle (70) vorzugsweise ferner einen Filter umfasst, der mit der wenigstens einen Bohrung (74.1) derart zusammenwirkt, dass das Speicherelement (50) in der Hülle (70) eingegrenzt wird.

7. Verdichter nach einem der Ansprüche 1 bis 6, bei dem die Dicke E der Hülle (70) zwischen 1 mm und 20 mm enthalten ist.

8. Verdichter nach einem der Ansprüche 1 bis 7, bei dem die Hülle (70) wenigstens eines der Materialien umfasst, ausgewählt aus: PTFE, einem Polyamid, einem Polyurethan, einem Polyethylen, PEEK, Polypropylen.

9. Verdichter nach einem der Ansprüche 1 bis 8, bei dem der Wasserstoffverdichter (10) ferner ein Wärmeaustauschmittel (60) umfasst, das dazu ausgelegt ist, einen Austausch von Wärme in direkter Weise mit dem Speicherelement (50) zu gewährleisten, wobei das Wärmeaustauschmittel (60) vorzugsweise ein Rohr umfasst, das von einem Wärmeträgerfluid durchströmt wird.

10. Verdichter nach Anspruch 9, bei dem das Wärmeaustauschmittel (60) eine zweite Außenoberfläche (60a) umfasst, die aus einem Material mit einer dritten thermischen Leitfähigkeit hergestellt ist, wobei das Wärmeaustauschmittel (60) die Druckkammer (20) durch eine erste Öffnung (26) durchsetzt, wobei der Verdichter (10) ferner ein Verbindungsmittel (23) umfasst, das einen Querschnitt mit ringförmiger Gestalt (23a) umfasst, wobei der Querschnitt mit ringförmiger Gestalt (23a) eine dichte Verbindung gewährleistet zwischen dem Wärmeaustauschmittel (60) und der Druckkammer (20), und jeglichen Kontakt zwischen dem Wärmeaustauschmittel (60) und der Druckkammer (60) verhindert, wobei das Verbindungsmittel (23) ein Material mit einer vierten thermischen Leitfähigkeit umfasst, die kleiner ist als ein Zehntel der dritten thermischen Leitfähigkeit, derart, dass das Wärmeaustauschmittel (60) thermisch von der Druckkammer (20) isoliert wird.

11. Verdichter nach Anspruch 10, bei dem die Druckkammer (20) einen zylindrischen Mantel umfasst, der sich entlang einer Längsachse (X) erstreckt, umfassend ein erstes Ende (26a), in dessen Bereich die erste Öffnung (26) gebildet ist, wobei das Verbindungsmittel (23) mit ringförmiger Gestalt in Anlage ist gegen einen Anschlag, der im Bereich der ersten Innenoberfläche (21) gebildet ist, wobei der Anschlag vorzugsweise eine Schulter umfasst, die im Bereich der ersten Innenoberfläche (21) gebildet ist.

12. Verdichter nach Anspruch 11, bei dem das Verbindungsmittel (23) gegen den Anschlag mittels eines Spannmittels (24) gehalten wird, wobei das Spannmittel (24) vorzugsweise einen Stopfen (24) umfasst, der einen Durchgang umfasst, der von dem Wärmeaustauschmittel (60) durchsetzt ist.

13. Verdichter nach Anspruch 12, bei dem eine Antireibscheibe (25) zwischen dem Spannmittel (24) und dem Verbindungsmittel (23) eingefügt ist.

14. Verdichter nach einem der Ansprüche 11 bis 13, bei dem das Verbindungsmittel (23) ferner mit ersten Dichtverbindungen (28a) versehen ist, die die dichte Verbindung zwischen der Druckkammer (20) und dem Wärmeaustauschmittel (60) gewährleisten.

15. Verdichter nach einem der Ansprüche 11 bis 14, bei dem das Wärmeaustauschmittel (60) ferner die Druckkammer (20) durch eine zweite Öffnung (27) durchsetzt, wobei zweite Dichtverbindungen (28b) die Dichtigkeit zwischen dem Wärmeaustauschmittel (60) und der Druckkammer (20) im Bereich der zweiten Öffnung (27) gewährleisten.

## Claims

1. Metal hydride hydrogen compressor (10) comprising:
- a pressure chamber (20), comprising an internal volume, delimited by a first internal surface (21),
- a casing (70) with a thickness E, the casing (70) comprising a first external surface (71) opposite the first internal surface (21), the casing (70) comprising an insulating material with a first thermal conductivity,
- a hydrogen storage element (50), contained in the casing (70), comprising a storage material suitable for storing or releasing hydrogen according to a temperature that is imposed thereon, and having a second thermal conductivity greater,
the compressor being **characterized in that** it comprises a casing (70) with a thickness E, in which the storage element (50) is contained, the casing (70) comprising a first external surface (71) opposite the first internal surface (21), the casing (70) comprising an insulating material with a first thermal conductivity, the second thermal conductivity being greater than the first thermal conductivity.

2. Compressor according to claim 1, wherein the hydrogen compressor (10) comprises arrangements (72) allowing a circulation of hydrogen between the first internal surface (21) and the first external surface (71).

3. Compressor according to claim 2, wherein the arrangements (72) comprise an annular space (72.1) disposed between the first internal surface (21) and the first external surface (71), and/or channels (72.2) formed on at least one of the first internal surface (21) and the first external surface (71).

4. Compressor according to any of claims 1 to 3, wherein the casing (70) further comprises means suitable for providing a passage of hydrogen (74) through the thickness E of the casing (70).

5. Compressor according to claim 4, wherein the casing (70) comprises an open porosity allowing the passage of hydrogen through the thickness E of said casing (70).

6. Compressor according to claim 4 or claim 5, wherein the casing (70) comprises at least one piercing (74.1) allowing the passage of hydrogen through the thickness E of said casing (70), advantageously the casing (70) also comprises a filter cooperating with the at least one piercing (74.1) so as to confine the storage element (50) in the casing (70).

7. Compressor according to any of claims 1 to 6, wherein the thickness E of the casing (70) is between 1 mm and 20 mm.

8. Compressor according to any of claims 1 to 7, wherein the casing (70) comprises at least one of the materials chosen from: PTFE, a polyamide, a polyurethane, a polyethylene, PEEK and polypropylene.

9. Compressor according to any of claims 1 to 8, wherein the hydrogen compressor (10) further comprises a heat exchange means (60) able to provide an exchange of heat directly with the storage element (50), advantageously the heat exchange means (60) comprises a tube through which a heat-transfer fluid travels.

10. Compressor according to claim 9, wherein the heat exchange means (60) comprises a second external surface (60a) made from a material with a third thermal conductivity, said heat exchange means (60) passing through the pressure chamber (20) through a first opening (26), the compressor (10) further comprises a connection means (23), comprising an annular-shaped section (23a), said annular-shaped section (23a) providing a sealed connection between the heat exchange means (60) and the pressure chamber (20), and preventing any contact between the heat exchange means (60) and the pressure chamber (20), the connection means (23) comprising a material with a fourth thermal conductivity lower than one tenth of the third thermal conductivity so as to thermally insulate the heat exchange means (60) from the pressure chamber (20).

11. Compressor according to claim 10, wherein the pressure chamber (20) comprises a cylindrical barrel extending along a longitudinal axis (X), comprising a first end (26a) at which the first opening (26) is formed, the annular-shaped connection means (23) being in abutment against a stop formed at the first internal surface (21), the stop advantageously comprising a shoulder formed at the first internal surface (21).

12. Compressor according to claim 11, wherein the connection means (23) is held against the stop by a clamping means (24), advantageously the clamping means (24) comprises a plug (24) comprising a passage through which the heat exchange means (60) passes.

13. Compressor according to claim 12, wherein an antifriction washer (25) is interposed between the clamping means (24) and the connection means (23).

14. Compressor according to any of claims 11 to 13, wherein the connection means (23) is also provided with first seals (28a) providing the sealed connection between the pressure chamber (20) and the heat exchange means (60).

15. Compressor according to any of claims 11 to 14, wherein the heat exchange means (60) also passes through the pressure chamber (20) through a second opening (27), second seals (28b) providing the seal between the heat exchange means (60) and the pressure chamber (20) at the second opening (27).
